# EUROPEAN PATENT APPLICATION

(11) **EP 2 869 174 A1**
(43) Date of publication of application: **06.05.2015**
(21) Application number: 13809682.1
(22) Date of filing: 22.05.2013
(51) Int. Cl.: G06F 3/048, G06F 17/21

(54) **METHOD AND DEVICE FOR TEXT INPUT AND DISPLAY OF INTELLIGENT TERMINAL**

(30) Priority: 27.06.2012 CN 201210214480
(71) Applicant: ZTE Corporation, Shenzhen, Guangdong 518057 (CN)
(72) Inventor: DONG, Youwei, Shenzhen Guangdong 518057 (CN); LI, Hujun, Shenzhen Guangdong 518057 (CN); WANG, Bin, Shenzhen Guangdong 518057 (CN)
(74) Representative: Gervasi, Gemma
(86) International application number: PCT/CN2013/076072
(87) International publication number: WO 2014/000543

(57) **Abstract**

A method and apparatus for text input and display of an intelligent terminal are provided. The method comprises: when a user performs text input on a text editing interface of the intelligent terminal, the intelligent terminal collecting a contact area of the user with a touch screen; and when the collected contact area reaches a set first area threshold, the intelligent terminal displaying and/or storing the text input by the user according to a first font attribute, wherein the first font attribute is different from a default font attribute of the text editing interface. By adopting the method and apparatus of the present invention, the width or size of the input fonts can be changed flexibly, so as to achieve the purpose of different input and display effects of the input text.

## Description

### Technical Field

The present invention relates to the intelligent terminal technology field, and in particular, to a method and apparatus for text input and display of an intelligent terminal.

### Background of the Related Art

The touch screen terminal with large screen and multi-touch function (such as, mobile phone, tablet computer) has presently become the mainstream design, and the disappearance of the physical key and the multi-point touch function strengthen the user experience greatly. Meanwhile, the intelligent terminal has already replaced the non-intelligent terminal slowly to be the first purchase selection of the user. The appearance of more and more third party applications promotes the popularization of the intelligent operating system greatly, which makes no matter the Original Equipment Manufacturer (OEM), the producers of the third party applications or the users, all benefit from it.

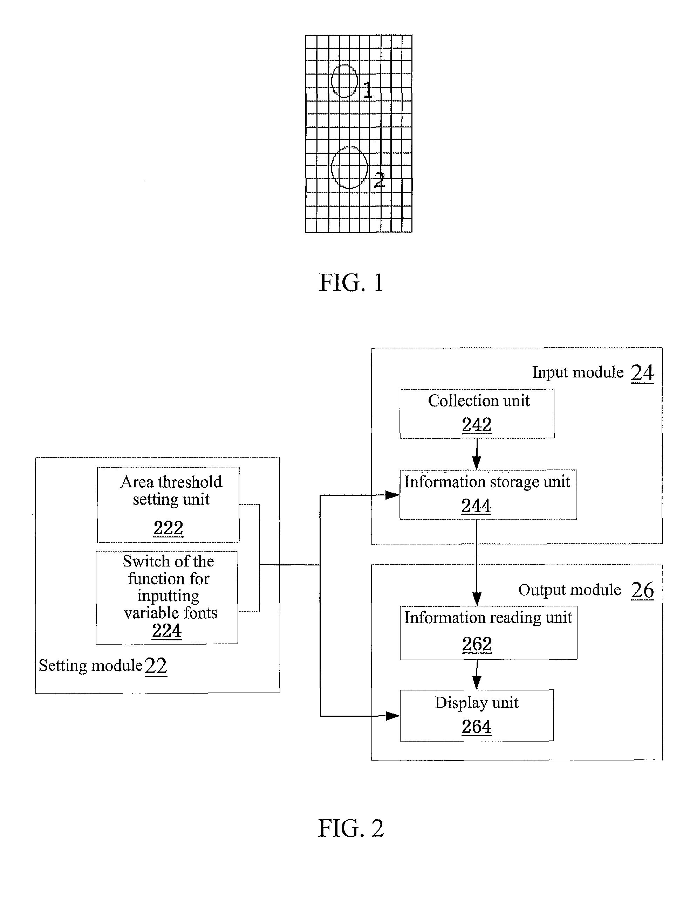

At present, in the popular intelligent terminal in the market, the touch screen input has already replaced the key input as the input device of the terminal gradually, and the touch screen develops from the original resistance screen only supporting the simple point touch into the electric capacity screen supporting the multi-point touch as well. The capacitive touch screen utilizes the electric capacity principle and distributes a plurality of sensors on the screen, and the number of the sensors is generally decided by the hardware wiring of X and Y directions; if the numbers of the hardware wiring in the X and Y directions are 18 and 11, then the number of the sensors is 18 x 11; when a finger of the user contacts the screen, the touch screen chip will report the touch area according to the signal intensity of the touched sensor; as shown in FIG. 1, the contact area with a serial number of 1 is 4, (that is, the number of the touched sensors is 4), and the contact area with a serial number of 2 is 9.

In more mainstream intelligent operating systems, the application or module involving the text input mostly adopt the single input and display mode; for example, for the short message module, the input and display of the short message is generally single standard style of handwriting under the Chinese input method, and the font sizes are uniform. Consider from the point of view of the user, facing the thing which does not change for a long time, the aesthetic fatigue will unavoidably occur; and the characters of different countries mostly will have different writing fonts, so, it is further not esthetic to use the single display mode during the text editing or display.

### Content of the Invention

A method and apparatus for text input and display of an intelligent terminal provided by the embodiment of the present invention, the width or size of the input fonts can be changed flexibly, so as to achieve the purpose of different input and display effects of the input text.

The embodiment of the present invention provides a method for text input and display of an intelligent terminal, comprising:
when a user performs text input on a text editing interface of the intelligent terminal, the intelligent terminal collecting a contact area of the user with a touch screen; and
when the collected contact area reaches a set first area threshold, the intelligent terminal displaying and/or storing text input by the user according to a first font attribute, wherein the first font attribute is different from a default font attribute of the text editing interface.

Alternatively, the first area threshold is greater than a minimum response area of the touch screen, and less than a maximum response area of the touch screen; and
difference between the first font attribute and the default font attribute comprises one or more of the following: font color, font thickness, font size or font width.

Alternatively, the method further comprises:
presetting multiple different font attributes corresponding to different area thresholds; and
when the user performs the text input, according to the collected contact area of the user with the touch screen, displaying and/or storing the text input by the user as per the font attribute corresponding to the contact area.

Alternatively, the method further comprises:
setting a switch of function for inputting variable fonts; and
when the switch of function for inputting variable fonts is shut, uniformly displaying and storing the text input by the user according to the default font attribute; and when the switch of function for inputting variable fonts is started, displaying and/or storing the text input by the user according to the font attribute corresponding to the contact area.

Alternatively, the method further comprises:
when the stored text is read and when the switch of function for inputting variable fonts is shut, uniformly displaying the read text; and when the switch of function for inputting variable fonts is started, displaying the read text according to the font attribute corresponding to the stored text.

The embodiment of the present invention further provides an apparatus for text input and display of an intelligent terminal, comprising a setting module, an input module and an output module, wherein:
the setting module is configured to: set a first area threshold;
the input module is configured to: when a user performs text input on a text editing interface, collect a contact area of the user with a touch screen; and when the collected contact area reaches the first area threshold, store text input by the user according to a first font attribute; wherein the first font attribute is different from a default font attribute of the text editing interface; and
the output module is configured to: read the text stored by the input module, and display the read text according to a font attribute corresponding to the text stored by the input module.

Alternatively, the setting module is configured to: set the first area threshold as greater than a minimum response area of the touch screen, and less than a maximum response area of the touch screen.

Alternatively, the setting module is further configured to: preset multiple different font attributes corresponding to different area thresholds; and
the input module is further configured to: when the user performs the text input, according to the collected contact area of the user with the touch screen, display and/or store the text input by the user as per the font attribute corresponding to the contact area; wherein, the different font attributes refer to one or more of the following different font attributes: font color, font thickness, font size or font width.

Alternatively, the setting module further comprises a switch of function for inputting variable fonts; and
the input module is further configured to: when the switch of function for inputting variable fonts is shut, uniformly store the text input by the user according to the default font attribute; and when the switch of function for inputting variable fonts is started, store the text input by the user according to the font attribute corresponding to the contact area.

Alternatively, the output module is further configured to: when the switch of function for inputting variable fonts is shut, uniformly display the read text according to the default font attribute; and when the switch of function for inputting variable fonts is started, display the read text according to the font attribute corresponding to the text stored by the input module.

By adopting the scheme of the embodiment of the present invention, when performing the text editing, it can display the input text according to the simple operation of the user and store the text as different font attributes, including different font colors, sizes and/or thicknesses, etc., therefore it can produce more esthetic and more various display effects.

### Brief Description of Drawings

The accompanying drawings described herein are used to provide further understanding for the present invention and constitute a part of the present application. The illustrated embodiments of the present invention and the description thereof are used to explain the present invention, rather than constituting an inappropriate limitation to the present invention. Wherein:
FIG. 1 is a diagram of a finger contacting a capacitance screen;
FIG. 2 is a component diagram of an apparatus for text input and display of an intelligent terminal according to an embodiment of the present invention;
FIG. 3 is a flow chart of processing of an input module according to an embodiment of the present invention;
FIG. 4 is a flow chart of processing of an output module according to an embodiment of the present invention.

### Preferred Embodiments of the Present Invention

At present, the touch screen, as the only input device for the user to operate the intelligent terminal, can accurately respond the clicking position and other relevant information of the user, and the information includes X/Y coordinate value of the clicked point, the ID of the point, and the contact area of the finger with the touch screen when the finger contacts the touch screen, etc. Generally when the finger contacts the touch screen, the response to the touching even by the touch screen is based on the default threshold of the contact area of one finger with the touch screen, and it just responds only when the contact area is greater than or equal to the threshold; meanwhile, for a too big contact area, in order to prevent the fault operation, the touch screen chip should not have data to report in this case, so these two kinds of situations just introduce the minimum and maximum values of the area sections for the response by the touch screen, and the setting of these two values can be finished through setting the register of the touch screen chip, and the specific sizes of these two values can be set based on different projects and situations.

Based on the above-mentioned information, the present embodiment provides a method for text input and display of an intelligent terminal, which adopts the following scheme.

When a user performs text input on a text editing interface of the intelligent terminal, the intelligent terminal collects a contact area of the user with a touch screen; and
when the collected contact area reaches a set first area threshold, the intelligent terminal displays and/or stores text input by the user according to a first font attribute, wherein the first font attribute is different from a default font attribute of the text editing interface.

Wherein, the first area threshold is greater than a minimum response area of the touch screen, and less than a maximum response area of the touch screen; and
difference between the first font attribute and the default font attribute comprises one or more of the following: font color, font thickness, font size or font width.

It needs to be illustrated that because what the default touch area corresponds to is the normal font (that is, the default font attribute), it is ok to set up the size of the touch area corresponding to a font attribute for another special display effect (that is, the first area threshold), and usually the first area threshold is set to be slightly larger than the default touch area.

In addition, multiple different font attributes corresponding to different area thresholds can also be preset; and
when the user performs the text input, according to the collected contact area of the user with the touch screen, the text input by the user is stored as per the font attribute corresponding to the contact area.

In the above-mentioned scheme, a switch for changing the input display (called as the switch of function for inputting variable fonts in this text), and the switch can be selected to be open or shut when the user performs the text input or read the stored text information.

When performing the text input, if the switch of function for inputting variable fonts is shut, the text input by the user is displayed and stored uniformly according to the default font attribute.

When reading the stored text, if the switch of function for inputting variable fonts is shut, the read text is displayed uniformly; if the switch of function for inputting variable fonts is open, then the read text is displayed according to the font attribute corresponding to the stored text.

By adopting the above-mentioned scheme, the display effect of the input font can be flexibly changed with no need of redundant selection operation of the user, for example, over striking, changing the width or size of the font, etc., and can also combine with different colors and fonts at the same time, thus achieving the purpose of different inputs and display effects of the input text.

The specific implementation of the above-mentioned scheme is as follows: setting area thresholds corresponding to different font attributes in the setting module, wherein, the threshold may be different for different users, so users can set the corresponding area threshold according to one's own habit in the setting module.

When the user performs the hand input in the input module, for example, the short message editing module, if the user wants to change the size or thickness of the input text font by self-adaptation, then open the function of the switch of function for inputting variable fonts in the setting module at first, thus, when performing the text input, the user can achieve the effect of the user changing the size or the thickness of the input text font through changing the contact area of the finger with the screen.

In order to explain the embodiment of the present invention, the implementation of the technical scheme of the present invention is described in detail with reference to the accompanying drawings and the embodiment hereinafter. It should be illustrated that, in the case of not conflicting, the embodiments and features in these embodiments in the present application can be arbitrarily combined with each other.

The embodiment of the present invention provides an apparatus for text input and display of an intelligent terminal, and this apparatus mainly includes the following modules: a setting module 22, an input module 24 and an output module 26. Wherein, the setting module 22 is mainly used for setting the threshold, and providing the switch 224 of function for inputting variable fonts; the input module 24 is used for finishing the record of the information according to the setting of the user, and the information includes the text content, font attribute corresponding to the text and some other information; and the output module 26 is mainly used for reading the information stored by the input module 24 and finishing the display of the text.

As shown in FIG. 2, in the present embodiment, the setting module 22 includes the following units.

An area threshold setting unit 222 is configured to: set different font attributes corresponding to different area thresholds.

The switch 224 of function for inputting variable fonts is configured to: open (enable) or shut a specific font display function according to the requirement of the user.

The input module24 includes the following units.

A collection unit 242 is configured to: collect the information of the contact area of the finger with the touch screen.

An information storage unit 244 is configured to: finish the storage of the information according to the current switch 224 of function for inputting variable fonts, the font attribute of the text setting and the input text information.

The output module26 includes the following units.

An information reading unit 262 is configured to: read the information stored by the information storage unit 244 from the input module 24.

The display module 264 is configured to: display the read text information according to the switch 224 of function for inputting variable fonts, and the font attribute corresponding to the read text.

The method for text input and display of the intelligent terminal of the present embodiment mainly includes the input processing procedure to the text by the input module and the output and display processing procedure to the text by the output module.

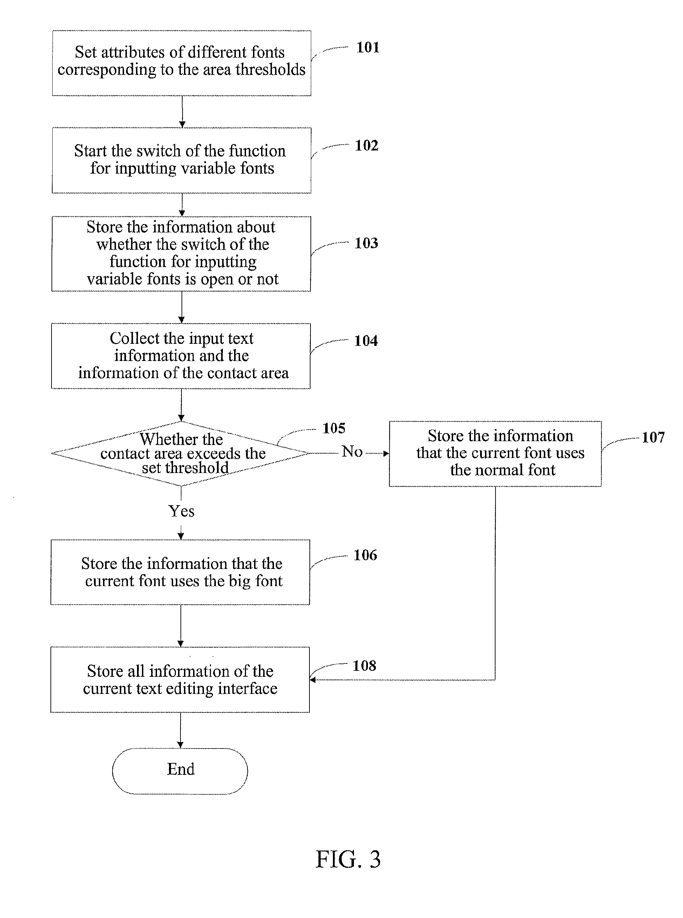

FIG. 3 is the specific example of the processing procedure of the input module. Referring to FIG. 3, the procedure includes the following mains steps.

In step 101: the user enters the setting module, and sets different font attributes corresponding to the area thresholds according to one's own habit.

In step 102: in the setting module, the user opens the switch of function for inputting variable fonts.

In step 103: the information whether the switch of function for inputting variable fonts is open or not in the setting module is stored.

In step 104: in the text editing interface, the information of the contact area of the finger with the touch screen is collected.

In step 105: it is judged whether the contact area exceeds the threshold set in step 101; when the contact area exceeds the set threshold, step 106 is executed; and when the contact area does not exceed the set threshold, step 107 is executed.

In step 106: it is assumed that, in the present embodiment, the font is magnified, displayed and stored when the contact area exceeds the set threshold, then the information that the big font is currently used is stored when storing the text information, and step 108 is executed continuously.

In step 107: the information that the normal font is currently used is stored, and step 108 is executed continuously.

In step 108: the input module finishes the storage of the information according to the current switch of function for inputting variable fonts, the font attribute of the text setting and the corresponding text information.

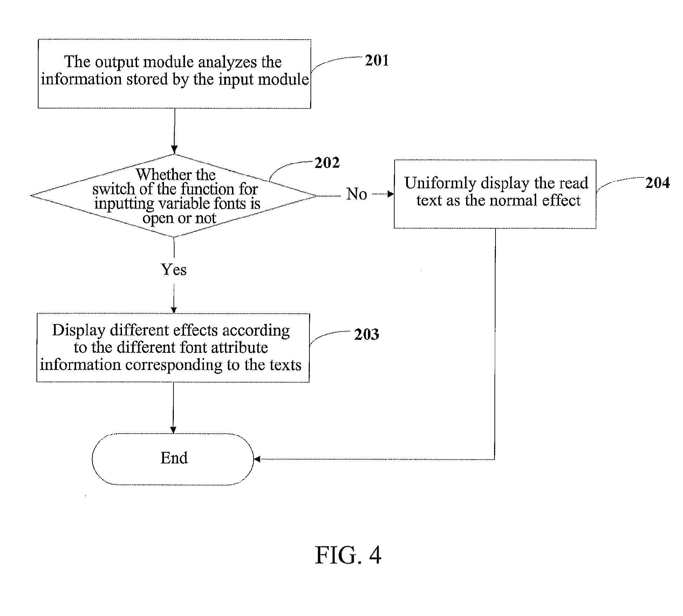

FIG. 4 is the specific example of the processing procedure of the output module. Referring to FIG. 4, the procedure includes the following main steps.

In step 201: the output module reads the text information stored by the input module, and analyzes the information stored by the input module.

In step 202: it is judged whether the switch of function for inputting variable fonts is open or not; if yes, then step 203 is executed; if not, then step 204 is executed.

In step 203: when the switch of function for inputting variable fonts is open, different font effects are displayed according to the read text information and the corresponding font attribute information, and the procedure is completed.

The user can finish the function of the special display effect by combining with the setting attribute, such as the font and color of the text, etc., during the text input.

In step 204: when the switch of function for inputting variable fonts is shut, then all the text information analyzed subsequently is displayed according to the uniform display mode, and the procedure is completed.

By applying the method of the embodiment of the present invention, when it is required to highlight the font or change the output effect of the font, the effect of over striking or magnifying can be achieved so long as increasing the contact area of the finger with the screen; and when it is not required to display this effect later, it can also cancel the special display effect of the font through shutting the switch of function for inputting variable fonts.

The above description is only the preferred embodiments of the present invention and is not intended to limit the present invention. The present invention can have a variety of other embodiments. Those skilled in the art can make the corresponding modifications and variations according to the present invention without departing from the spirit and essence of the present invention. And all of these modifications or the variations should be embodied in the scope of the appending claims of the present invention.

Obviously, it can be understood by those skilled in the art that each module or each step above-mentioned in the present invention can be implemented by the universal calculating apparatus, and they can be integrated in a single calculating apparatus, or distributed in the network made up by a plurality of calculating apparatus. Alternatively, they can be implemented by the executable program codes of the calculating apparatus. Accordingly, they can be stored in the storage apparatus and implemented by the calculating apparatus, and in some situation, the shown or described steps can be executed according to a sequence different from this place, or they are made to each integrated circuit module respectively, or a plurality of modules or steps therein are made into the single integrated circuit module to be implemented. This way, the present invention is not limit to any specific form of the combination of the hardware and software.

### Industrial Applicability

By adopting the scheme of the embodiment of the present invention, when performing the text editing, it can display the input text according to the simple operation of the user and store the text as different font attributes, including different font colors, sizes and/or thicknesses, etc., therefore it can produce more esthetic and more various display effects.

## Claims

1. A method for text input and display of an intelligent terminal, comprising:
when a user performs text input on a text editing interface of the intelligent terminal, the intelligent terminal collecting a contact area of the user with a touch screen; and
when the collected contact area reaches a set first area threshold, the intelligent terminal displaying and/or storing text input by the user according to a first font attribute, wherein the first font attribute is different from a default font attribute of the text editing interface.

2. The method according to claim 1, wherein,
the first area threshold is greater than a minimum response area of the touch screen, and less than a maximum response area of the touch screen; and
difference between the first font attribute and the default font attribute comprises one or more of the following: font color, font thickness, font size or font width.

3. The method according to claim 1, further comprising:
presetting multiple different font attributes corresponding to different area thresholds; and
when the user performs the text input, according to the collected contact area of the user with the touch screen, displaying and/or storing the text input by the user as per the font attribute corresponding to the contact area.

4. The method according to claim 1, 2 or 3, further comprising:
setting a switch of function for inputting variable fonts; and
when the switch of function for inputting variable fonts is shut, uniformly displaying and storing the text input by the user according to the default font attribute; and when the switch of function for inputting variable fonts is open, displaying and/or storing the text input by the user according to the font attribute corresponding to the contact area.

5. The method according to claim 4, further comprising:
when the stored text is read, if the switch of function for inputting variable fonts is shut, uniformly displaying the read text; and if the switch of function for inputting variable fonts is open, displaying the read text according to the font attribute corresponding to the stored text.

6. An apparatus for text input and display of an intelligent terminal, comprising a setting module, an input module and an output module, wherein:
the setting module is configured to: set a first area threshold;
the input module is configured to: when a user performs text input on a text editing interface, collect a contact area of the user with a touch screen; and when the collected contact area reaches the first area threshold, store text input by the user according to a first font attribute; wherein the first font attribute is different from a default font attribute of the text editing interface; and
the output module is configured to: read the text stored by the input module, and display the read text according to a font attribute corresponding to the text stored by the input module.

7. The apparatus according to claim 6, wherein,
the setting module is configured to: set the first area threshold as greater than a minimum response area of the touch screen, and less than a maximum response area of the touch screen.

8. The apparatus according to claim 6 or 7, wherein,
the setting module is further configured to: preset multiple different font attributes corresponding to different area thresholds; and
the input module is further configured to: when the user performs the text input, according to the collected contact area of the user with the touch screen, display and/or store the text input by the user as per the font attribute corresponding to the contact area; wherein, the different font attributes refer to one or more of the following different font attributes: font color, font thickness, font size or font width.

9. The apparatus according to claim 8, wherein,
the setting module further comprises a switch of function for inputting variable fonts; and
the input module is further configured to: when the switch of function for inputting variable fonts is shut, uniformly store the text input by the user according to the default font attribute; and when the switch of function for inputting variable fonts is open, store the text input by the user according to the font attribute corresponding to the contact area.

10. The apparatus according to claim 9, wherein,
the output module is further configured to: when the switch of function for inputting variable fonts is shut, uniformly display the read text according to the default font attribute; and when the switch of function for inputting variable fonts is open, display the read text according to the font attribute corresponding to the text stored by the input module.
